# EUROPÄISCHE PATENTSCHRIFT

(11) **EP 3 538 608 B1**
(45) Veröffentlichungstag und Bekanntmachung des Hinweises auf die Patenterteilung: **24.09.2025**
(21) Anmeldenummer: 17787874.1
(22) Anmeldetag: 20.10.2017
(51) Int. Cl.: C08L 23/16

(54) **POLYMERZUSAMMENSETZUNG UND FORMTEIL DARAUS**
POLYMER COMPOSITION AND SHAPED PART MADE OF SAME
COMPOSITION POLYMÈRE ET PIÈCE MOULÉE FABRIQUÉE AVEC CETTE COMPOSITION

(30) Priorität: 08.11.2016 DE 202016106224 U
(43) Veröffentlichungstag der Anmeldung: 18.09.2019
(73) Patentinhaber: RESRG Automotive SE & Co. KG, 95111 Rehau (DE)
(72) Erfinder: STEFFL, Udo, 95466 Weidenberg (DE); SEIFERT, Andreas, 95111 Rehau (DE)
(86) Internationale Anmeldenummer: PCT/EP2017/001232
(87) Internationale Veröffentlichungsnummer: WO 2018/086726

(56) Entgegenhaltungen:
- DE-A1- 19 646 150
- US-A- 4 735 988
- US-A1- 2015 094 413

## Beschreibung

Die Erfindung betrifft eine Polymerzusammensetzung und ein Formteil daraus.

Um Polymerzusammensetzungen mechanisch zu verbessern, ist es aus dem Stand der Technik bekannt, diese mit Glasfasern zu versetzen.

Die Anbindung der Glasfasern an das Polymermaterial ist dabei der entscheidende Faktor, der zu den erwünschten verbesserten mechanischen Eigenschaften führt.

Um diese Anbindung der Glasfasern an das Polymermaterial zu gewährleisten, gibt es verschiedene Lösungen. So ist es bekannt, Glasfasern an ihrer Oberfläche beispielsweise mit einer Schlichte zu behandeln, die die Anhaftung des Polymermaterials ermöglicht.

Ein anderer Ansatz zielt auf die Kompatibilisierung des Polymermaterials ab, wodurch dieses an der Glasfaser zum Haften gebracht wird.

Die deutsche Patentanmeldung DE 196 46 150 A1 ein Verbundharzmaterial, das aus einem vernetzenden Polyurethanharz und einem reaktiven Harz besteht und durch Kneten des vernetzenden Polyurethanharzes und des reaktiven Harzes bei einer Temperatur gebildet wird, die nicht tiefer als der Schmelzpunkt des reaktiven Harzes liegt.

Diese Techniken sind aufwendig, verursachen Kosten und sind hinsichtlich ihrer erzielbaren Effekte limitiert.

Aufgabe der vorliegenden Erfindung ist es daher, eine Polymerzusammensetzung zur Verfügung zu stellen, welche ein Polyolefin aufweist, insbesondere ein Polypropylen, einen Schlagzähmodifier, einen Füllstoff und Glasfasern.

Diese Polymerzusammensetzung soll in einfacher Weise derart mechanisch aufgewertet sein, dass die Glasfasern an das Polymermaterial verbessert angebunden sind.

Weiterhin soll eine verbesserte Steifigkeit und geringere Kriechneigungerzeilt werden, um dem Polymermaterial neue Anwendungsfelder zu erschließen. Eine solche Polymerzusammensetzung soll ohne großen Aufwand und kostengünstig bereitstellbar sein.

Eine weitere Aufgabe der Erfindung ist es, ein Formteil aus einer derartigen Polymerzusammensetzung zur Verfügung zu stellen.

Die Lösung der ersten Aufgabe, eine Polymerzusammensetzung anzugeben, erfolgt gemäß Anspruch 1.

Im Rahmen der vorliegenden Erfindung wurde gefunden, dass eine Polymerzusammensetzung, aufweisend ein erstes Polyolefin, das ein Propylen-Ethylen-Copolymer ist, ein zweites Polyolefin, das ein Homo-Polypropylen ist, einen Schlagzähmodifier, einen Füllstoff und Glasfasern diese Aufgabe dann löst, wenn vorgesehen ist, dass Partikel, die Polyurethan enthalten, in der Polymerzusammensetzung vorhanden sind, die Glasfasern Kurzglasfasern sind mit einer Länge von 0,1 bis 5 mm und der Schlagzähmodifier ein Polyolefin-1-alpha-Olefincopolymer und / oder ein Ethylen-Propylen-Kautschuk ist.

Überraschenderweise wurde im Rahmen der vorliegenden Erfindung gefunden, dass die Partikel, die Polyurethan enthalten, eine haftvermittelnde Eigenschaft aufweisen, wodurch die Ankopplung der Glasfasern an das Polypropylen bzw. die Haftung zwischen Glasfasern und dem Polypropylen-Copolymer bzw. dem Polypropylen deutlich verbessert ist.

Die in der Polymerzusammensetzung erfindungsgemäß vorhandenen Partikel, die Polyurethan enthalten, bewirken, dass eine feste Anhaftung des Polymermaterials auf den Glasfasern stattfindet. Durch das Vorhandensein des zweiten Polyolefins, das ein Homo-Polypropylen ist, weist die erfindungsgemäße Polymerzusammensetzung eine bessere Steifigkeit und eine geringere Kriechneigung bei noch ausreichender Schlagzähigkeit auf.

Hierdurch resultieren die verbesserten mechanischen Eigenschaften der erfindungsgemäßen Polymerzusammensetzung.

Im Rahmen der vorliegenden Erfindung kann es sich als überaus günstig erweisen, wenn vorgesehen ist, dass das erste Polyolefin ein Propylen-Ethylen-Copolymer mit einem MFI nach ISO 1133 von 5 bis 50 g / 10 min bei 2,16 kg und 230 °C und einem E-Modul nach EN ISO 527-1 von 700 bis 1600 MPa ist, und das zweite Polyolefin (2.2) ein Homo-Polypropylen mit einem MFI nach ISO 1133 von 10 bis 200 g / 10 min bei 2,16 kg und 230 °C und einem E-Modul nach EN ISO 527-1 von 1200 bis 2200 MPa ist.

Mit diesen vorstehend definierten Polypropylen-Copolymeren bzw. Polypropylenen kann eine breite Rohstoffbasis genutzt werden, um die vorstehend bezeichnete Polymerzusammensetzung, die mechanisch gegenüber dem Stand der Technik verbessert ist, bereitzustellen.

Erfindungsgemäß ist der Schlagzähmodifier ein Polyolefin-1-alpha-Olefincopolymer und / oder ein Ethylen-Propylen-Kautschuk.

Die Auswahl des Schlagzähmodifiers für die erfindungsgemäße Polymerzusammensetzung aus einem Polyolefin-1-alpha-Olefincopolymer und / oder einem Ethylen-Propylen-Kautschuk ermöglicht es, die Polymerzusammensetzung nach den technischen Erfordernissen oder nach den Vorgaben des Kunden hinsichtlich ihres Schlagzähverhaltens genau einzustellen.

Im Rahmen der Untersuchungen an der erfindungsgemäßen Polymerzusammensetzung hat sich ergeben, dass es sehr hilfreich sein kann, wenn der Füllstoff ausgewählt ist aus Talkum, Kreide, Wollastonit, Glaskugeln, Carbonfasern und Mischungen aus den Vorgenannten.

Durch die Auswahl des Füllstoffes für die erfindungsgemäße Polymerzusammensetzung aus den voranstehend genannten kann die Mechanik der Polymerzusammensetzung weiter verbessert oder an die Vorgaben des Kunden angepasst werden.

Erfindungsgemäß sind die Glasfasern Kurzglasfasern mit einer Länge von 0,1 bis 5 mm.

Durch die Auswahl der Glasfasern als Kurzglasfasern mit einer Länge von 0,1 bis 5 mm kann eine mechanisch besonders verbesserte Polymerzusammensetzung bereitgestellt werden.

Dabei hat sich ergeben, dass mit großem Vorteil eine solche Polymerzusammensetzung Glasfasern zu 10 bis 30 Gew.-% enthalten kann.

Dadurch ist es möglich, den Gehalt an Glasfasern in der Polymerzusammensetzung der vorliegenden Erfindung anzupassen und so eine Balance zwischen der verbesserten Mechanik und dem Füllgrad der Polymerzusammensetzung mit Glasfasern zu erreichen.

Als sehr praktikabel hat sich bei der vorliegenden Erfindung erwiesen, wenn vorgesehen ist, dass die Partikel, die Polyurethan enthalten, eine Größe von 10 bis 300 µm aufweisen.

Bei einer Größe der Partikel, die Polyurethan enthalten, von 10 bis 300 µm lassen sich diese in der Polymerzusammensetzung sehr gleichmäßig und homogen verteilen.

Dadurch ist die Wirkung der Partikel, die Polyurethan enthalten, auf die Anbindung des Polymermaterials an die Glasfasern besonders wirkungsvoll. Auf diese Weise kann eine mechanisch besonders aufgewertete Polymerzusammensetzung gemäß vorliegender Erfindung bereitgestellt werden.

In einer sehr günstigen Ausführungsform der vorliegenden Erfindung kann vorgesehen sein, dass die Partikel, die Polyurethan enthalten, zu 0,1 bis 7,0 Gew.-% in der Polymerzusammensetzung enthalten sind.

Bei Untersuchungen hat sich gezeigt, dass unterhalb einer Zugabemenge von 0,1 Gew.-% an Partikeln, die Polyurethan enthalten, zu der Polymerzusammensetzung keine Verbesserung der mechanischen Eigenschaftswerte erzielbar sind.

Bei einer Zugabemenge von mehr als 7,0 Gew.-% an Partikeln, die Polyurethan enthalten, zu der Polymerzusammensetzung überwiegen andere Effekte, die einer Verbesserung der mechanischen Eigenschaften entgegenwirken.

Die Polymerzusammensetzung der vorliegenden Erfindung kann Additive, wie beispielsweise Pigmente, Verarbeitungshilfsmittel, Stabilisatoren, Leitfähigkeitszusätze, Keimbildner, Trennmittel, und weitere enthalten.

Durch die Zugabe von den vorstehend genannten Additiven kann die Herstellung, Formung, Entformung, das Handling, die Anwendung, das Erscheinungsbild und die Langzeitstabilität der erfindungsgemäßen Polymerzusammensetzung verbessert werden.

Die Polymerzusammensetzung der vorliegenden Erfindung kann in einem Formungsverfahren der Polymerverarbeitung zu einem Formteil geformt werden.

Beispielsweise kann die Polymerzusammensetzung durch einen Spritzgussprozess oder einen Extrusionsprozess oder einen Blasprozess oder einen Tiefziehprozess oder einen Thermoformprozess oder einen generativen Fertigungsprozess (3D-Druck) zu einem Formteil geformt werden. Es ist auch möglich, dass Kombinationen der vorstehend genannten Prozesse zur Herstellung eines Formteils genutzt werden.

Die Lösung der Aufgabe der vorliegenden Erfindung, ein Formteil anzugeben, erfolgt gemäß Anspruch 10.

Im Rahmen der vorliegenden Erfindung wurde erkannt, dass ein Formteil aus der Polymerzusammensetzung, wie vorstehend beschrieben, aufgrund der verbesserten mechanischen Eigenschaften der Polymerzusammensetzung als ein gegenüber dem Stand der Technik verbessertes Formteil bereitstellbar ist.

### Ausführungsbeispiel

Im Vergleich zu einer Formulierung der Polymerzusammensetzung ohne das zweite Polyolefin sind die mechanischen Eigenschaften hinsichtlich Zugfestigkeit und E-Modul des aus der erfindungsgemäßen Polymerzusammensetzung hergestellten Formteils deutlich verbessert, was an den die Erfindung erläuternden Beispielen gemäß Tabelle 1 leicht erkennbar ist.

Vergleich der erfindungsgemäßen Beispiele 1 und 2 mit den Vergleichsbeispielen:

**Tabelle 1**

| | Vergleichsbeispiel 1 | Erfindungsgemäßes Beispiel 1 | Vergleichsbeispiel 2 | Erfindungsgemäßes Beispiel 2 |
|---|---|---|---|---|
| Zusammensetzung (alle Angaben in Gew.-%) | | | | |
| Erstes Polyolefin | 60 | 40 | 55 | 40 |
| Zweites Polyolefin | 0 | 30 | 0 | 20 |
| Schlagzähmodifier | 10 | 5 | 8 | 5 |
| Füllstoff | 12 | 7 | 10 | 8 |
| Glasfasern | 15 | 15 | 25 | 25 |
| Partikel, die Polyurethan enthalten | 2 | 2 | 2 | 2 |
| Stabilisator 1 | 0,3 | 0,3 | 0,3 | 0,3 |
| Stabilisator 2 | 0,2 | 0,2 | 0,2 | 0,2 |
| Haftvermittler PP-MAH | 3 | 3 | 3 | 3 |
| | | | | |
| | | | | |
| | | | | |

| Eigenschaften | | | | |
|---|---|---|---|---|
| | | | | |
| MFR Wert | 5,45 g/10min | 7,65 g/10min | 4,07 g/10min | 5,98 g/10min |
| DIN EN ISO 1133-1 230°C/2,16kg | | | | |
| Dichte | 1,09 g/cm³ | 1,05 g/cm³ | 1,17 g/cm³ | 1,14 g/cm³ |
| DIN EN ISO 1183-1 Verf. A | | | | |
| Zugfestigkeit | 40 N/mm² | 48 N/mm² | 45 N/mm² | 58 N/mm² |
| DIN EN ISO 527-1/-2 | | | | |
| Reißdehnung | 5 % | 7 % | 9 % | 6 % |
| DIN EN ISO 527-1/-2 | | | | |
| Schlagzähigkeit 23°C nach 5.8 | 39 kJ/m² | 38 KJ/m² | 50 kJ/m² | 41 KJ/m² |
| DIN EN ISO 179-1/1fU | | | | |
| Schlagzähigkeit - 20°C | 36 kJ/m² | 35 KJ/m² | 44 kJ/m² | 38 KJ/m² |
| DIN EN ISO 179-1/1fU | | | | |
| Kerbschlagzähigkeit 23°C | 13 kJ/m² | 10 KJ/m² | 15 kJ/m² | 10 KJ/m² |
| DIN EN ISO 179-1/1eA | | | | |
| Biege-E-Modul | 3032 N/mm² | 3195 N/mm² | 3956 N/mm² | 4578 N/mm² |
| DIN EN ISO 178 | | | | |
| Zug-E-Modul | 3338 N/mm² | 3551 N/mm² | 4454 N/mm² | 5126 N/mm² |
| DIN EN ISO 527-1/-2 | | | | |
| Glührückstand 850°C | 26,9 % | 21,9 % | 34,7 % | 33,7 % |
| DIN EN ISO 3451-1, Verf. A | | | | |
| Glasfasereinbindung | gut | gut | gut | gut |

Zur Zusammensetzung des Vergleichsbeispiels und der erfindungsgemäßen Beispiele 1 und 2:
Erstes Polyolefin, das ein Propylen-Ethylen-Copolymer ist
MFI nach ISO 1133 von 36 g / 10 min bei 2,16 kg und 230 °C und einem E-Modul nach EN ISO 527-1 von 1200 MPa;
Zweites Polyolefin, das ein Homo-Polypropylen ist
MFI nach ISO 1133 von 25 g / 10 min bei 2,16 kg und 230 °C und einem E-Modul nach EN ISO 527-1 von 1900 MPa
Schlagzähmodifier
Polyolefin-1-alpha-Olefincopolymer mit einem MFR (190°C / 2,16kg) von 1,0 g / 10min nach ASTM D 1238 und einer Dichte von 0,857 g/cm3 nach ASTM D 792;
Füllstoff
Talkum mit der chemischen Zusammensetzung

| | |
|---|---|
| SiO₂ | 56 % |
| MgO | 31 % |
| Al₂O₃ | 3,6 % |
| Fe₂O₃ | 0,9 % und |
| CaO | 0,5 %, |

einer Dichte von 2,8 g/cm³ nach ISO 787/10 und einer Schüttdichte von ≥ 0,6 kg/dm³ nach EN 1097/10;
Glasfasern
Kurzglasfasern mit einem Feuchtegehalt von max. 0,08 % nach ISO 3344 und einer Faserlänge von 3,0 bis 5,0 mm;
Partikel, die Polyurethan enthalten
Größe 50 bis 150 µm;
Stabilisator 1
Thermostabilisator mit einer Dichte (bei 20 °C) von 1,0 bis 1,2 g/cm³ und einem Schmelzbereich (DSC) von 109 bis 180 °C;
Stabilisator 2
Lichtstabilisator;
Haftvermittler PP-MAH
Polypropylen gepfropft mit Maleinsäureanhydrid, MSA-Gehalt von 1 %.

Aus der Tabelle 1 geht hervor, dass die erfindungsgemäße Polymerzusammensetzung, aufweisend ein erstes Polyolefin, das ein Propylen-Ethylen-Copolymer ist, ein zweites Polyolefin, das ein Homo-Polypropylen ist, einen Schlagzähmodifier, einen Füllstoff, Glasfasern und Partikel, die Polyurethan enthalten, gegenüber den Vergleichsbeispielen, die kein zweites Polyolefin, das eine Homo-Polypropylen ist, Partikel, aufweisen, mechanisch verbessert ist.

Insbesondere ist durch die vorliegende Erfindung beim Vergleich der erfindungsgemäßen Zusammensetzung mit einer Vergleichszusammensetzung ohne das zweite Polyolefin, das ein Homo-Polypropylen ist, die Zugfestigkeit gemäß DIN EN ISO 527-1/-2 bei gleichem Gehalt an Gasfasern um ca. 20 bis 30 %, das Biege-E-Modul nach DIN EN ISO 178 um ca. 5 bis 15 % und der Zug-E-Modul nach DIN EN ISO 527-1/-2 um ca. 6 bis 15 % verbessert.

Insbesondere ist bei der erfindungsgemäßen Polymerzusammensetzung die Steifigkeits-Zähigkeits-Balance gegenüber einer Zusammensetzung, die kein zweites Polefin enthält, verbessert. Überaus vorteilhaft ist die aus der Erfindung resultierende bessere Steifigkeit und geringere Kriechneigung bei noch ausreichender Schlagzähigkeit der erfindungsgemäßen Polymerzusammensetzung.

Zur Herstellung der erfindungsgemäßen Polymerzusammensetzung werden die Komponenten, das Polyolefin, insbesondere ein Polypropylen, der Schlagzähmodifier, der Füllstoff, Glasfasern und die Partikel, die Polyurethan enthalten, homogen miteinander vermischt. Dies kann in einer Anlage zur Mischung von Komponenten für die Herstellung von Polymerzusammensetzungen oder in einem Extruder erfolgen.

Die so hergestellte erfindungsgemäße Polymerzusammensetzung kann durch bekannte Polymerformprozesse, wie Extrudieren, Spritzgießen, Blasen, Schäumen, Tiefziehen, Thermoformen, generatives Fertigen (3D-Druck) und andere mehr, insbesondere auch durch Kombination der vorgenannten Prozesse, zu Formteilen geformt werden.

Im Rahmen der vorliegenden Erfindung hat sich überraschend ergeben, dass sogenanntes lackiertes Ausschussmaterial aus der Fertigung von lackierten Bauteilen aus Polypropylen für die Automobilindustrie mit Vorteil für die Herstellung der erfindungsgemäßen Polymerzusammensetzung verwendet werden kann. Durch das Krümeln dieser Bauteile gelingt es, Partikel zu erzeugen, die Polyurethan enthalten. In der erfindungsgemäßen Polymerzusammensetzung bewirken diese die verbesserten mechanischen Werte - wie vorstehend ausgeführt. Die Nutzung solchen gekrümelten Ausschussmaterials aus der Fertigung von lackierten Bauteilen für die Automobilindustrie ist auch unter dem Aspekt vorteilhaft, dass durch diese bereits Polypropylen, Schlagzähmodifier, Füllstoffe und die Partikel, die Polyurethan enthalten, bereitgestellt wird, so dass lediglich noch Glasfasern zuzugeben sind und diese Mischung dann zu homogenisieren ist.

Die vorliegende Erfindung findet breite Anwendung bei Bauteilen, die aus der erfindungsgemäßen Polymerzusammensetzung hergestellt sind. Insbesondere für Bauteile, die besonderen mechanischen Beanspruchungen unterworfen sind, kann die Erfindung vorteilhaft eingesetzt werden.

So sind beispielsweise Bauteile für Automobilaußenverkleidungsteile, wie Stoßfängerverkleidungen, Schweller, Spoiler, Kotflügel und Heckklappenverkleidungen zur Stabilisierung mit sogenannten Schließ- oder Verstärkungsteilen ausgestattet.

Derartige Bauteile lassen sich vorteilhaft aus der erfindungsgemäßen Polymerzusammensetzung herstellen.

Auch in anderen Bereichen, wie beispielsweise bei Industrie- und Bauprodukten, im Fenster- und Fassadenbau, sowie beim Möbelbau können Bauteile aus der erfindungsgemäßen Polymerzusammensetzung eingesetzt werden.

Die Erfindung ist überall dort vorteilhaft nutzbar, wo es darauf an kommt, dass eine bessere Steifigkeit und geringere Kriechneigung bei noch ausreichender Schlagzähigkeit der erfindungsgemäßen Polymerzusammensetzung für die jeweilige Anwendung ausschlaggebend ist.

Weitere wichtige Merkmale und Vorteile der Erfindung ergeben sich aus den Unteransprüchen, aus der Figur und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die vorliegende Erfindung wird anhand der beigefügten Figur näher erläutert.

Hierzu zeigt:

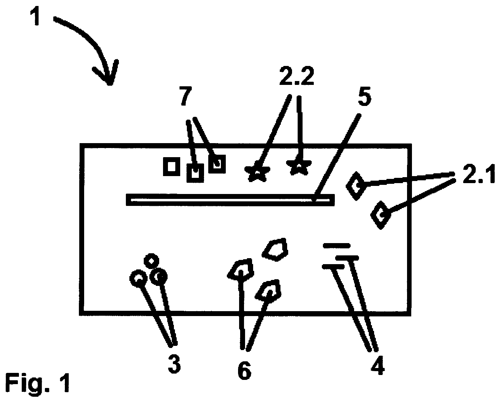

- Fig. 1: eine schematische Darstellung der erfindungsgemäßen Polymerzusammensetzung.

In Fig. 1 ist in einer schematischen Darstellung die erfindungsgemäße Polymerzusammensetzung 1 gezeigt.

Die erfindungsgemäße Polymerzusammensetzung (1) weist ein erstes Polyolefin (2.1), insbesondere ein Polypropylen, ein zweites Polyolefin (2.2), das ein Homo-Polypropylen ist, einen Schlagzähmodifier (3), einen Füllstoff (4), Glasfasern (5) und Partikel (6), die Polyurethan enthalten, auf.

Das erste Polyolefin (2.1), das zweite Polyolefin (2.2), der Schlagzähmodifier (3), der Füllstoff (4), die Glasfasern (5) und die Partikel (6), die Polyurethan enthalten, sind in der Polymerzusammensetzung (1) homogen verteilt.

Die vorliegende Erfindung wurde unter Bezugnahme auf die in der Figur lediglich schematisch gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den Ansprüchen ergibt.

### Bezugszeichenliste

- 1: Polymerzusammensetzung
- 2.1: erstes Polyolefin
- 2.2: zweites Polyolefin
- 3: Schlagzähmodifier
- 4: Füllstoff
- 5: Glasfasern
- 6: Partikel, die Polyurethan enthalten
- 10: Formteil

## Patentansprüche

1. Polymerzusammensetzung (1), aufweisend ein erstes Polyolefin (2.1), das ein Propylen-Ethylen-Copolymer ist, ein zweites Polyolefin (2.2), das ein Homo-Polypropylen ist, einen Schlagzähmodifier (3), einen Füllstoff (4), Glasfasern (5) und Partikel (6), die Polyurethan enthalten, **dadurch gekennzeichnet, dass** die Glasfasern (5) Kurzglasfasern sind mit einer Länge von 0,1 bis 5 mm und der Schlagzähmodifier (3) ein Polyolefin-1-alpha-Olefincopolymer und / oder ein Ethylen-Propylen-Kautschuk ist.

2. Polymerzusammensetzung (1) nach Anspruch 1, **dadurch gekennzeichnet, dass** das erste Polyolefin (2.1) ein Propylen-Ethylen-Copolymer mit einem MFI nach ISO 1133 von 5 bis 50 g / 10 min bei 2,16 kg und 230 °C und einem E-Modul nach EN ISO 527-1 von 700 bis 1600 MPa ist, und das zweite Polyolefin (2.2) ein Homo-Polypropylen mit einem MFI nach ISO 1133 von 10 bis 200 g / 10 min bei 2,16 kg und 230 °C und einem E-Modul nach EN ISO 527-1 von 1200 bis 2200 MPa ist.

3. Polymerzusammensetzung (1) nach Anspruch 1 oder 2, **dadurch gekennzeichnet, dass** der Füllstoff (4) ausgewählt ist aus Talkum, Kreide, Wollastonit, Glaskugeln, Carbonfasern und Mischungen aus den Vorgenannten.

4. Polymerzusammensetzung (1) nach einem der vorangehenden Ansprüche, **dadurch gekennzeichnet, dass** die Glasfasern (5) zu 10 bis 30 Gewichts-% enthalten sind.

5. Polymerzusammensetzung (1) nach einem der vorangehenden Ansprüche, **dadurch gekennzeichnet, dass** die Partikel (6), die Polyurethan enthalten, eine Größe von 10 bis 300 µm aufweisen.

6. Polymerzusammensetzung (1) nach einem der vorangehenden Ansprüche, **dadurch gekennzeichnet, dass** die Partikel (6), die Polyurethan enthalten, zu 0,1 bis 7,0 Gewichts-% enthalten sind.

7. Polymerzusammensetzung (1) nach einem der vorangehenden Ansprüche, **dadurch gekennzeichnet, dass** Additive, wie Pigmente, Verarbeitungshilfsmittel, Stabilisatoren, Leitfähigkeitszusätze, Keimbildner, Trennmittel, und weitere enthalten sind.

8. Formteil (10) aus der Polymerzusammensetzung (1) nach einem der Ansprüche 1 bis 7.

## Claims

1. Polymer composition (1) having a first polyolefin (2.1), which is a propylene-ethylene copolymer, a second polyolefin (2.2), which is a homo-polypropylene, an impact modifier (3), a filler (4), glass fibres (5) and particles (6) containing polyurethane, **characterised in that** the glass fibres (5) are short glass fibres with a length of 0.1 to 5 mm, and the impact modifier (3) is a polyolefin-1-alpha-olefin copolymer and/or an ethylene-propylene rubber.

2. Polymer composition (1) according to claim 1, **characterised in that** the first polyolefin (2.1) is a propylene-ethylene copolymer having an MFI in accordance with ISO 1133 of 5 to 50 g/10 min at 2.16 kg and 230°C and having a modulus of elasticity in accordance with EN ISO 527-1 of 700 to 1600 MPa, and the second polyolefin (2.2) is a homo-propylene having an MFI in accordance with ISO 1133 of 10 to 200 g/10 min at 2.16 kg and 230°C and having a modulus of elasticity in accordance with EN ISO 527-1 of 1200 to 2200 MPa.

3. Polymer composition (1) according to claim 1 or 2, **characterised in that** the filler (4) is selected from talc, chalk, wollastonite, glass beads, carbon fibres and mixtures of the above.

4. Polymer composition (1) according to any one of the preceding claims, **characterised in that** the glass fibres (5) are contained at 10 to 30% by weight.

5. Polymer composition (1) according to any one of the preceding claims, **characterised in that** the particles (6), which contain polyurethane, have a size of 10 to 300 µm.

6. Polymer composition (1) according to any one of the preceding claims, **characterised in that** the particles (6), which contain polyurethane, are contained at 0.1 to 7.0% by weight.

7. Polymer composition (1) according to any one of the preceding claims, **characterised in that** additives such as pigments, processing aids, stabilisers, conductivity additives, nucleating agents, release agents and others are contained.

8. Moulded part (10) made of the polymer composition (1) according to any one of claims 1 to 7.

## Revendications

1. Composition polymère (1), présentant une première polyoléfine (2.1) qui est un copolymère de propylène-éthylène, une deuxième polyoléfine (2.2) qui est un homopolypropylène, un modificateur d'impact (3), une charge (4), des fibres de verre (5) et des particules (6) contenant du polyuréthane, **caractérisée en ce que** les fibres de verre (5) sont des fibres de verre courtes ayant une longueur de 0,1 à 5 mm et le modificateur d'impact (3) est un copolymère de polyoléfine-1-alpha-oléfine et/ou un caoutchouc d'éthylène-propylène.

2. Composition polymère (1) selon la revendication 1, **caractérisée en ce que** la première polyoléfine (2.1) est un copolymère de propylène-éthylène ayant un MFI selon ISO 1133 de 5 à 50 g/10 min à 2,16 kg et 230 °C et un module d'élasticité selon EN ISO 527-1 de 700 à 1 600 MPa, et la deuxième polyoléfine (2.2) est un homopolypropylène ayant un MFI selon ISO 1133 de 10 à 200 g/10 min à 2,16 kg et 230 °C et un module E selon EN ISO 527-1 de 1 200 à 2 200 MPa.

3. Composition polymère (1) selon la revendication 1 ou 2, **caractérisée en ce que** la charge (4) est choisie parmi le talc, la craie, la wollastonite, les billes de verre, les fibres de carbone et les mélanges de ceux-ci.

4. Composition polymère (1) selon l'une quelconque des revendications précédentes, **caractérisée en ce que** les fibres de verre (5) sont contenues à raison de 10 à 30 % en poids.

5. Composition polymère (1) selon l'une quelconque des revendications précédentes, **caractérisée en ce que** les particules (6) contenant du polyuréthane présentent une taille de 10 à 300 µm.

6. Composition polymère (1) selon l'une quelconque des revendications précédentes, **caractérisée en ce que** les particules (6) contenant du polyuréthane sont contenues à raison de 0,1 à 7,0 % en poids.

7. Composition polymère (1) selon l'une quelconque des revendications précédentes, **caractérisée en ce qu'**elle contient des additifs tels que des pigments, des auxiliaires de traitement, des stabilisateurs, des additifs de conductivité, des agents de nucléation, des agents de démoulage, et autres.

8. Pièce moulée (10) à partir de la composition polymère (1) selon l'une quelconque des revendications 1 à 7.
